# EUROPEAN PATENT SPECIFICATION

(11) **EP 4 031 797 B1**
(45) Date of publication and mention of the grant of the patent: **31.07.2024**
(21) Application number: 20807104.3
(22) Date of filing: 18.09.2020
(51) Int. Cl.: F17C 5/00

(54) **METHOD FOR FILLING GAS CYLINDERS AND INSTALLATION FOR FILING GAS CYLINDERS WITH PRESSURIZED GASES**
VERFAHREN ZUM BEFÜLLEN VON GASFLASCHEN UND ANLAGE ZUM BEFÜLLEN VON GASFLASCHEN MIT DRUCKGASEN
PROCÉDÉ DE REMPLISSAGE DE BOUTEILLES DE GAZ ET INSTALLATION DE REMPLISSAGE DE BOUTEILLES DE GAZ AVEC DES GAZ SOUS PRESSION

(30) Priority: 20.09.2019 PL 43123319
(43) Date of publication of application: 27.07.2022
(73) Proprietor: Gaztech Spolka Z Orgraniczona Odpowiedzialnoscia Spolka Komandytowa, 09-411 Plock (PL)
(72) Inventor: PIETROWICZ, Slawomir, 50-330 Wroclaw (PL); RUZIEWICZ, Adam, 51-675 Wroclaw (PL); CZAJKOWSKI, Cezary, 50-555 Wroclaw (PL); NOWAK, Andrzej, 27-200 Starachowice (PL); RAK, Józef, 50-367 Wroclaw (PL); ZIELINSKI, Norbert, 09-410 Plock (PL)
(74) Representative: LDS Lazewski Depo & Partners
(86) International application number: PCT/IB2020/058723
(87) International publication number: WO 2021/053608

(56) References cited:
- US-A- 5 934 081
- US-A1- 2015 192 249
- US-A1- 2018 306 381
- US-A1- 2019 086 031

## Description

### Field of the Invention

The subject of the present invention is a method for filling gas cylinders and an installation for filling gas cylinders with pressurized gases.

### State of the art

In known processes for filling gas cylinders, for example with technical gases, the gas to be filled is stored in the tanks in a liquefied form and, in order to be able to fill the cylinders with it, it must first be brought into the gas phase. To this end, usually liquefied gas, also called "cryogenic fluid" or "cryogen", is conveyed from the reservoir to the device in which a phase transition of liquid to gas occurs. Devices used for this purpose are i.a. heat exchangers and evaporators. The gas obtained as a result of this transformation is then brought to the desired pressure and temperature, so that the cylinder filling process can be carried out.

In a classic cylinder filling installation, liquefied gases at cryogenic temperatures evaporate as they flow through a heat exchanger or an atmospheric evaporator. In this process, the gas receives an enormous amount of heat needed for the phase transition from the environment. As a result of heat exchange the air flowing around the exchanger cools down. The cold generated in this manner is irretrievably lost to the environment.

Methods for filling the cylinder, in which in order to obtain a gas having a controlled temperature, direct contact between the gas phase (gas) and liquid (liquefied gas) is used, are also known in the prior art. This process is also used in installations for gasification of natural gas.

US 5,934,081 discloses an installation for filling gas cylinders comprising a reservoir for cryogenic liquid, which may be liquefied oxygen, nitrogen, argon, helium, carbon dioxide, methane, natural gas and mixtures thereof, connected via conduit through a valve to a pump, and then to an evaporator, wherein there is a splitter upstream of the evaporator dividing the stream of liquid under elevated pressure into a first portion and a second portion. The first portion is directed to the evaporator, exiting as a pressurized gas, and the second portion bypasses the evaporator through a bypass conduit fitted with a bypass valve and is then mixed with said pressurized gas. As a result of this mixing, a pressurized gas of controlled temperature is produced, suitable for filling a cylinder. According to disclosure of US 5,934,081, the cylinder filling process is automated and controlled via a programmable controller and computer system monitoring the weight of the control cylinder. Additionally, the system includes an analyzer that monitors the purity of the gas filled into the cylinder. In addition, the temperature and pressure in the control cylinder are also monitored, as well as the gas temperature before it is introduced into the cylinder.

A similar installation is described in the description of the Polish utility model No. PL.70667, where the installation includes two filling sections, which enables the cylinders to be filled with mixtures of technical gases from independent sources.

Patent application EP 2 738 442 describes a system for dosing a cryogenic fluid (in particular liquefied natural gas) comprising a tank with liquefied natural gas from which two dosing conduits exit, each containing a sediment tank with a pump, a heating circuit (including an intermediate tank and a heat exchanger, amongst others), a bypass conduit bypassing the heating circuit and a valve for mixing the liquid and gas phases, and a dispenser.

The main limitation of a long filling time of gas cylinders is the increase in cylinder temperature above safe values, which is the result of an increase in the pressure of the filled gas.

The problem of obtaining the optimum temperature when filling gas cylinders and gas tanks with gas has been solved in various ways in the prior art.

In the known installations for filling cylinders with acetylene, in order to cool the cylinders water is sprayed onto the cylinders being filled by means of sprinklers. The water used for cooling may, for example, come from an external source, such as a water mains or an internal fire protection system.

The description of utility model CN208652127 discloses a gas cylinder comprising a cooling system including a cooling jacket, in which there is a spiral pipe comprising cooling oil, surrounding an internal gas tank of the cylinder, wherein cooling water is flowing in the spaces of the jacket.

In patent application WO2018/220303, an installation for refilling tanks with pressurized gas (e.g. hydrogen) is described comprising an evaporator, a compressor and a heat exchanger for cooling the pressurized gas. The cooling medium used in the heat exchanger is the fluid leaving the evaporator in a branch bypassing the compressor, which is then recycled to the stream upstream of the evaporator.

The patent application JP201978319 discloses an installation for recovering cold energy from the gasification process of liquefied gas which is gaseous at room temperature (e.g. LNG, nitrogen, oxygen). The liquefied gas from the gas tank is led to a liquid evaporator, in which due to phase transition the cooling medium conveyed to an external installation using the cold is cooled down. However, this document does not disclose practical uses of recovered cold energy and, in particular, it does not disclose the method of using the recovered cold energy to reduce the temperature of gas cylinders during the filling process. The document US201592249 A1 also discloses an installation for cooling cylinders.

Therefore there is a need to provide a method and/or installation that provides an increased efficiency of the filling time and at the same time efficient cooling of the gas cylinders during their filling, wherein preferably such a method and/or installation should not use external sources of thermal energy.

### The essence of the invention

The subject of the invention is a method for filling gas cylinders comprising the steps of:
a) conveying the stream of liquified gas from at least one gas source to the at least one heat exchanger,
b) conducting the phase transition of the stream of liquified gas into gas in at least one heat exchanger, while cooling the first working medium (6b),
c) conveying the output gas stream to at least one cylinder filling station,
d) filling gas into at least one cylinder,
characterized in that
the method further comprises the process of cooling the filling cylinder comprising:
e) conveying the first working medium from at least one heat exchanger to at least one insulated buffer tank,
f) conducting heat exchange between the first working medium and the heat-accumulating medium in at least one insulated buffer tank,
g) conducting heat exchange between the heat-accumulating medium, and a second working medium in at least one insulated buffer tank,
h) conveying the second working medium from at least one insulated buffer tank to at least one cooling device comprising at least one air cooler and at least one blowing fan, wherein at least one cooling device is located adjacent to at least one cylinder filling station,
i) conducting heat exchange between the second working medium and air in at least one air cooler,
j) blowing air substantially towards at least one gas cylinder filling station.

Preferably the method comprises temperature and/or pressure and/or flow rate measurements of the liquefied gas stream and/or the partial stream and/or the partial bypass stream and/or the gas stream exiting the heat exchanger and/or the outlet gas stream and/or the streams of the first working medium and/or the streams of the second working medium and/or the heat-accumulating medium and/or air and/or at least one cooling device and/or at least one gas cylinder being filled.

In another preferred embodiment
a1) upstream of the heat exchanger, the liquefied gas stream is divided into at least one partial stream and a partial bypass stream, wherein at least one partial stream is conveyed to at least one heat exchanger, and the partial bypass stream is conveyed through a bypass line bypassing at least one heat exchanger, and then
a2) a partial bypass stream is injected into gas stream exiting the at least one first heat exchanger to form an outlet gas stream.

In one preferred embodiment, liquefied gas stream can be divided into two partial streams and one bypass stream, wherein when the partial stream is led to a heat exchanger, the partial stream is stopped, and when the temperature of the heat-accumulating medium is within a predetermined threshold range, the partial stream flow is stopped and the partial stream is led to an evaporator, wherein the streams exiting the heat exchanger and evaporator are combined with the bypass stream to form an outlet gas stream.

In another preferred embodiment, upstream of the heat exchanger, stream of liquified gas may be divided into two partial streams, wherein when the partial stream is guided to the heat exchanger, partial stream is stopped, and when the temperature of the heat-accumulating medium is within a predetermined threshold range, the flow of the partial stream is stopped and the partial stream is led to an evaporator.

Preferably, two or more insulated buffer tanks are used in the method, wherein the first working medium is selectively directed to one of the insulated buffer tanks.

Preferably, in step e) the temperature of the at least one cylinder, which is being filled is reduced to a temperature ranging from about 15°C to about 40°C.

Preferably, between the heat exchange process between the first working medium and the heat-accumulating medium, and the heat exchange process between the heat-accumulating medium and the second working medium there is a time interval ranging from 15 minutes to 8 hours.

Preferably, the method further comprises controlling the flow rate of the partial bypass stream.

Preferably, regulating of the pressure of liquified gas before introducing it to at least one first heat exchanger and/or controlling the flow rate of partial bypass stream and/or controlling the rate of filling of at least one cylinder, adjusting the operating parameters of the cooling device and/or controlling the flow rate of the streams of the first and/or second working medium is carried out by a computer system using the results of measurements of temperature and/or pressure and/or flow rate of liquefied gas stream and/or partial stream and/or partial bypass stream and/or gas stream and/or outlet gas stream and/or the streams of the first working medium and/or the streams of the second working medium and/or the heat-accumulating medium and/or air and/or at least one cooling device and/or at least one gas cylinder being filled.

The subject of the invention is also an installation for filling gas cylinders with pressurized gases comprising:
at least one source of liquefied gas,
at least one heat exchanger with the first working medium,
at least one cylinder filling station comprising at least one gas cylinder,
**characterized in that it comprises**
at least one insulated buffer tank with heat-accumulating medium,
at least one cooling device comprising at least one air cooler and at least one blowing fan, wherein at least one cooling device is located adjacent to at least one cylinder filling station,
wherein
at least one heat exchanger is connected to the source of liquefied gas by a conduit,
the at least one heat exchanger is connected by conduits constituting the circuit of the first working medium in contact with the heat-accumulating medium, to at least one insulated buffer tank,
at least one insulated buffer tank is connected by conduits constituting the circuit of the second working medium in contact with the heat-accumulating medium, with at least one air cooler, and
at least one blowing fan is directed such that air is blown substantially toward at least one gas cylinder filling station.

Preferably, the installation according to the invention further comprises:
a splitting connector connected by a conduit to at least one source of liquefied gas and the heat exchanger,
a collecting connector connected by a conduit to at least one heat exchanger and by a conduit to at least one cylinder filling station, and
a bypass conduit connected to the splitting connector and the collecting connector.

Preferably, the installation according to the invention comprises temperature and/or pressure and/or flow rate sensors connected to the conduit and/or conduits of the first working medium and/or conduits of the second working medium and/or a conduit exiting from at least one heat exchanger and/or a conduit leading to at least one cylinder filling station and/or a bypass conduit and/or located in at least one cylinder filling station and/or in at least one insulated buffer tank and/or in at least one cooling device.

Preferably, the installation according to the invention further comprises an evaporator connected to the splitting connector and the collecting connector by conduits.

In another preferred embodiment, the installation according to the invention comprises an evaporator connected to a bypass conduit between the splitting connector and the collecting connector.

Preferably, the installation according to the invention further comprises a pump connected to the conduit between the source of liquified gas and the heat exchanger or the splitting connector (70).

Preferably, the installation according to the invention further comprises a equalizing system connected to a conduit upstream and downstream of the pump.

Preferably, the installation according to the invention comprises a regulating valve arranged on the bypass conduit.

Preferably, the installation according to the invention comprises pumps located respectively on the conduits of the first and second working medium.

Preferably, the installation according to the invention comprises a control circuit coupled to the collecting connector and/or the pump and/or the pumps, control valve and/or cooling device and/or sensors present in the installation and/or at least one cylinder filling station.

Preferably, the source of liquified gas is selected from the group comprising horizontal or vertical above-ground or underground tanks and mobile tanks.

Preferably, the heat exchanger is selected from the group comprising shell and tube exchanger, spiral exchanger, plate exchanger, tube-in-tube exchanger or the jacket exchanger, working in co-current or counter-current mode.

Preferably, the installation according to the invention comprises means for dividing the second working fluid stream cooled in at least one insulated buffer tank, and guiding it outside the installation.

Preferably, at the cylinder filling station there is at least one pallet comprising from one to sixteen cylinders.

### Advantages of the invention

The advantage of the present invention over prior art systems is that it allows for using the cold from the cryogenic fluid evaporation process in later cylinderfilling process. In prior art solutions relating to filling of gas cylinders, the cold from the liquefied gas evaporation process is directly transferred to the environment. Instead of the classical evaporator, the present invention uses a heat exchanger, wherein the cold is transported to an insulated buffer tank and used at any time for cooling the cylinder during the filling process.

Consequently, the advantage of the present invention is that it provides a reduction of the cylinder filling time compared to the base value, assumed as cylinder filling time without any cooling, by 20 - 70%, while ensuring that the temperatures of the filled cylinders are within safe ranges, and the process of cooling of the cylinders itself takes place exclusively or mainly with the use of heat recovered during the cylinder filling process, namely during the liquid-gas phase transition.

### Drawing

The subject of the invention in an exemplary embodiment is shown in the drawing wherein:
Figure 1 shows schematically an installation according to the invention.
Figures 2 and 3 show the temperature relationships of cooling air, heat-accumulating medium and cooler for the first two and eight hours of operation of the installation according to the invention.

### Detailed description of the invention

The subject of this patent application is a method for filling gas cylinders, in which, during filling, the gas cylinders are cooled with the use of blown air cooled by thermal energy obtained from the phase transition of liquefied gas, and an installation for filling gas cylinders with pressurized gases.

In a particularly preferred embodiment of the invention, the method of the present invention is carried out using an installation of the present invention.

### Gases processed according to the invention

The method and installation according to the present invention can be used to process gases selected from the group comprising: technical gases, gases for food industry, industrial gases, shielding mixtures for welding, calibration mixtures, welding mixtures, plasma cutting mixtures, etc. In general, in the method and installation according to the invention all gases that are supplied in a liquefied form and are finally converted to gaseous form can be processed. Preferably said gases are the ones selected from the group comprising, but not limited to, acetylene, nitrogen, ammonia, argon, butane, carbon dioxide, ethylene, helium, propane, pressurized air, oxygen, nitrous oxide, nitric oxide, hydrogen, and gas mixtures comprising at least two, preferably two, three, four or five of those mentioned above, for example mixtures comprising nitrogen and hydrogen, nitrogen and ethylene, argon and carbon dioxide, argon and oxygen, argon and hydrogen, argon and helium, oxygen and carbon dioxide, helium, nitrogen and carbon dioxide, argon, helium and carbon dioxide, argon, carbon dioxide and oxygen, argon, carbon dioxide and nitrogen, argon, carbon dioxide and nitrogen oxide. In a particularly preferred embodiment, the method and installation according to the present invention are used for processing technical gases and technical gas mixtures.

In accordance with the present invention, the liquefied gas used in the method according to the invention is conveyed from at least one gas source to at least one heat exchanger, in which phase transition of liquified gas stream into gas is conducted while cooling the first working medium flowing through at least one heat exchanger.

### Liquefied gas sources

The sources of liquefied gas used in accordance with the present invention may advantageously be above-ground or underground, vertical or horizontal cylindrical tanks, capable of storage from 30 to 62 tons of liquefied gas, based on a Dewar tank design, in which thermal insulation is realized in the form of two steel walls, between which there is a highly diluted gas (vacuum), as well as tanks with insulation characterized by low thermal conductivity coefficient, which allows for economic storage of substances in liquid form. This design allows to store the technical gas in a liquefied form with minimal medium losses. In other embodiments, mobile gas tanks are used as liquefied gas sources, e.g. transported by road or rail transport.

In a particularly preferred embodiment of the invention, a source of gas is a tank with vacuum insulation.

The temperature of the gas stored in the liquefied gas source will depend on the type of the gas and is typically in the range of about -268.9°C (273 K) to about -0.15°C (273 K).

### Heat exchanger

According to a first aspect of the present invention, the installation comprises at least one heat exchanger connected by conduits to at least one liquefied gas source, wherein in this heat exchanger the phase transition is carried out.

The heat exchanger used in accordance with the invention may be any type of exchanger known in the art in which a liquid-gas phase transition of any of the above-mentioned gases can take place, and in which a working medium ("first working medium "), which is cooled as a result of carrying out said phase transition and due to contact with the liquefied gas, which is subjected to said phase transition, and which can be transported as cooled after leaving the heat exchanger, is used.

Preferably, the heat exchanger is a shell and tube exchanger, spiral exchanger, plate exchanger, tube-in-tube exchanger or the jacket exchanger, working in co-current or counter-current mode. Due to the specificity of work and reduction of internal stresses resulting from temperature gradients, it is advantageous to use a shell and tube or spiral exchanger.

In a particularly preferred embodiment of the invention, the heat exchanger used for recovery of the cooling power is a counter-current, shell and tube heat exchanger in which heat is exchanged between the treated gas and the first working medium.

Preferably, the first working medium may be selected from the group comprising: ethylene or propylene glycol, water and mixtures thereof, wherein particularly preferred first working media are: a mixture of propylene glycol with distilled water in proportions selected depending on the temperature of the gas phase transition to be carried out. In one particularly preferred embodiment of the invention, the first working medium is an aqueous solution of glycol at a concentration of 40% by weight.

The operating temperature of the first working medium depends on the type of medium used and can preferably be in the range of from about -30°C to about -20°C, preferably from about -20°C to about 0°C, for example from about -23°C to about 0°C, preferably from about -13°C to about -18°C, most preferably it is about -23°C.

The number of heat exchangers used in the invention, as well as their size and, consequently their efficiency and construction, as well as the first working medium used depend on other components used in the installation for filling the cylinders, mainly on the type of processed gas and the efficiency of the installation for filling the cylinders (i.a., the size of the buffer tank, the number and type of gas cylinders filled simultaneously, etc.). The use of several exchangers in series arrangement may allow for "receiving cooling power" at different temperatures. The series connection of more than one heat exchanger enables their activation depending on the capacity of the installation or the liquefied gases used.

The maximum working pressure difference of the exchanger is 420 bar in the temperature range from 77 K to 323 K, but working pressure differences of 200, 300 and 400 bar are also possible.

In a preferred embodiment, the heat exchanger is equipped with a bypass conduit connected on one side to the splitting connector connected to a conduit leading from a liquid gas source and a conduit leading to the heat exchanger, and on the other side to the collecting connector connected to a conduit exiting the heat exchanger and a conduit leading to the rest of the installation. This design allows the portion of liquefied gas to pass through, while bypassing the heat exchanger and phase transition.

Injection of cold liquified gas into the heated gas exiting the heat exchanger causes the instantaneous evaporation of liquified gas, resulting in decrease of the temperature of the resulting mixture. Consequently, the use of a bypass conduit allows to control the temperature of gas conveyed to the cylinder filling station and thus helps to achieve the optimal temperature in a controlled manner when filling the gas cylinders.

Preferably, the use of a bypass conduit allows the gas exiting the heat exchanger to be cooled maximum by 30°C, more preferably by 10°C, most preferably by 20°C.

In a particularly preferred embodiment, the bypass conduit is equipped with a regulating valve allowing to control the amount of liquified gas passing through a bypass conduit and injected into the gas leaving the heat exchanger. The presence of this valve helps to control the injection process and to regulate the final temperature of the gas conveyed to the cylinder filling station.

In yet another preferred embodiment, the installation of the present invention comprises at least one evaporator connected by a splitting connector and a collecting connector. Accordingly, in this preferred embodiment, the method according to the invention is carried out such that the stream of liquified gas from the source of liquified gas is divided into two partial streams and one bypass stream, wherein one partial stream can be conveyed to the heat exchanger, the second partial stream can be conveyed to the evaporator and the bypass stream is conveyed through the bypass conduit.

Alternatively, a heat exchanger may be used instead of the evaporator in which the working medium which enables carrying out the phase transition will not be transported to an insulated buffer tank but, for example, conveyed outside the installation.

The purpose of the evaporator in the installation according to the present invention is to prevent the freezing of the heat-accumulating medium in the buffer tank due to the continuous supply of cooled first working medium to the buffer tank.

According to this preferred embodiment, the partial stream flow through the evaporator is only conducted when certain process conditions are met, preferably when the temperature of the heat-accumulating medium is within a predetermined threshold range. When these process conditions are met, the flow of the partial stream through the heat exchanger is stopped and the liquefied gas is conveyed to the evaporator. When said predetermined process conditions are no longer met, preferably when the temperature of the heat-accumulating medium is outside the threshold range, the flow of liquefied gas flowing through the evaporator is stopped and the liquefied gas flows through the heat exchanger again. To this end, the splitting connector used must be equipped with means for directing the liquefied gas stream to an appropriate branch, preferably three-way valves.

In yet another preferred embodiment of the invention, the evaporator is not included as an additional component of the installation according to the invention, but is connected to a bypass conduit. In this preferred embodiment, the method according to the invention is carried out so that the stream of liquified gas from the source of liquified gas is divided into two partial streams, whereby one partial stream can be conveyed to a heat exchanger, the second partial stream can be conveyed to the evaporator. In other words, in this preferred embodiment, there is no liquefied gas stream which is conveyed bypassing the phase transition. Analogously, as described above, the flow of the partial stream through the evaporator is only conducted when certain process conditions are met, preferably when the temperature of the heat-accumulating medium is within a predetermined threshold range and the flow of the partial stream through the heat exchanger is stopped.

The evaporator used in these preferred embodiments may be any evaporator known in the art, used in processes in which the phase transition of liquified gas is carried out, for example, one of the gases mentioned hereinbefore. Among the known types of evaporators, vertical or horizontal atmospheric evaporators can be especially mentioned, in which the liquefied gas preferably flows through a tubing with outward ribbing. The purpose of ribs is to to increase the heat exchange surface with the environment and therefore to increase the effectiveness of the cold release. Preferably, the evaporator used in the present invention is an atmospheric evaporator in which the phase transition occurs due to the heating of the liquefied gas stream by the action of atmospheric air.

The number of evaporators used in accordance with the invention, as well as their sizes and, consequently, their efficiency and design depend on other components used in the cylinder filling installation, primarily on the type of gas processed, the size and the type of heat exchanger, the type, size and type of the insulated buffer tank and the cylinder filling installation efficiency (the number and type of gas cylinders filled at the same time etc.).

### Cylinder filling station

The gas stream obtained by phase transition or preferably after injection of the liquified gas into the stream leaving the heat exchanger (or an evaporator), described by the term "output gas stream" is directed to at least one filling cylinder station, where the filling of at least one gas cylinder with the gas is carried out.

The cylinder filling station may be a typical station known in the art and includes the typical components such as conduits, shut-off valves, quick connector, etc. required for efficient and safe filling of gas cylinders. Preferably, each cylinder on the filling station is placed in a basket and is connected to the installation by means of a high pressure flexible hose. The cylinder filling station may allow for filling from one to sixteen, preferably from one to nine, more preferably from one to twelve and most preferably sixteen gas cylinders simultaneously.

According to the present invention, the filling station can be used to fill any type of cylinder intended for the storage of pressurized gases, in particular the gases and gas mixtures mentioned hereinabove. In typical applications, cylinders having volume of 30 and 50 dm³, height of 970 and 1515 mm respectively, weight of 43 and 64 kg respectively, are used, made of structural chromium-molybdenum alloy steel for thermal improvement with a yield point above 1020 MPa.

In a particularly preferred embodiment, the method and installation according to the present invention are used to fill gas cylinders with a target pressure of 30 MPa (300 bar) or higher, up to 35 MPa (350 bar).

### Insulated buffer tank

An essential aspect of the present invention is that the first working medium cooled due to said phase transition is conveyed from at least one heat exchanger to at least one insulated buffer tank which contains a heat-accumulating medium.

In at least one said insulated buffer tank, the heat exchange between the first working medium and the heat-accumulating medium is carried out, whereby the temperature of the heat-accumulating medium is lowered, as well as the heat exchange between the heat-accumulating medium and the second working medium is carried out, whereby the temperature of the second working medium is lowered.

Accordingly, a typical insulated buffer tank that can be used in the method and installation of the present invention comprises a space for a heat-accumulating medium and conduits in which first and second working medium are flowing, respectively, and is designed in such manner that heat exchange between the first working medium and the heat-accumulating medium, as well as a separate heat exchange between the heat-accumulating medium and the second working medium are possible.

The size of the insulated buffer tank, its design as well as heat-accumulating medium used, depend on other components used in the cylinder filling installation, mainly on the type of processed gas and the efficiency of the cylinder filling installation (i.a., the size of the heat exchanger, the number and type of simultaneously filled gas cylinders etc.). The size (volume) of the insulated buffer tank per one palette comprising sixteen gas cylinders can preferably be in the range of from about 500 liters to about 10000 liters, and for example 5000 liters, preferably 800 liters.

The temperature that may be maintained in the insulated buffer tank depends on the heat-accumulating medium used. Preferably, it will be a temperature ranging from about -30°C to about 10°C, preferably from about -10°C to about 10°C, preferably from about -5°C to about -12°C, for example about -27°C.

The heat (cold)-accumulating medium used in the insulated buffer tank may be a phase-transition material or a liquid characterized by high thermal inertia. Preferably, the heat-accumulating medium may be selected from the group comprising, but not limited to: water, alcohols and glycols, salts including hydrated salts, ionic liquids, fatty acids, paraffins, sodium sulphate (IV) trihydrate mixed with cellulose, bentonite, and optionally mixtures thereof, wherein a mixture of water and alcohol or water and salt is a particularly preferred heat-accumulating medium due to the high thermal inertia and the low phase transition temperature, in particular an aqueous ethylene glycol solution having a concentration of 20% to 80% by weight.

Structurally, the described component may be similar to the construction of a thermal coupling with high thermal inertia. Typically such a device consists of a vertical cylindrical tank fed with streams of the same medium at different temperatures. As a result of the internal flow, the streams mix to reduce or increase the temperature of the liquid. As a final result, employing the specific heat of a given substance and its total weight, it is possible to accumulate the thermal energy.

Commercially available insulated buffer tanks for use with the heat-accumulating media listed above may be applicable in the present invention.

In one embodiment of the present invention, said two heat exchange processes occur simultaneously. In another preferred embodiment of the invention, the heat-accumulating medium is cooled down in the first heat exchange, and the second heat exchange takes place after a certain period of time, depending on the technological process requirements.

Said period depends primarily on the type of heat-accumulating medium used as well as on the volume and construction of the buffer tank and ranges from about 15 minutes to about 8 hours, preferably from about 2 hours to about 4 hours, preferably from about 3 hours to about 4 hours, in particular about 2 hours.

Due to the fact that the first working medium cooled by the phase transition is supplied to the insulated buffer tank, the temperature of the heat-accumulating medium in the insulated buffer tank is continuously lowered. Consequently, depending on the heat-accumulating medium used, there is a greater or lower risk of freezing. This risk is related to the lower use of cooling power than the cooling power obtained from the phase transition of gas. For this reason, the method and installation of the present invention provide the above-described anti-freeze protection measures for the heat-accumulating medium.

Alternatively, in order to reduce or even eliminate the risk of the heat-accumulating medium freezing, in yet another preferred embodiment of the invention, more than one insulated buffer tank may be used. In such an embodiment, when there is a risk of freezing of the heat-accumulating medium, for example when certain process conditions are met, in particular when the temperature of the heat-accumulating medium in the first insulated buffer tank is within a predetermined threshold range, the stream of the first working medium is redirected to the second (or another) insulated buffer tank.

Preferably, according to the present invention, from one to six, preferably from two to six, preferably from three to five, and in yet another preferred embodiment, five insulated buffer tanks may be used.

Preferably, the second working agent may be selected from the group comprising: water, mixtures comprising alcohols and salts and mixtures comprising salts, glycols and water mixtures of glycols, wherein a particularly preferred first working agent is a glycol solution with a concentration of from 20 to 80 wt. % more preferably 40 wt. %.

The operating temperature of the second working agent depends on the agent used and is preferably in a range from about -25°C to about 20°C, preferably from about -10°C to about 10°C, and in particular from about -0°C to about 5°C.

### Cooling device

A cooled second working medium is conveyed from the at least one insulated buffer tank to at least one cooling device located adjacent to the at least one cylinder filling station.

According to the invention, the cooling device is used to cool the gas cylinders during filling by using a blow of air cooled by heat exchange with the second working medium.

According to a preferred embodiment of the invention, the cooling device comprises at least one air cooler and at least one blowing fan.

In the air cooler, there us a heat exchange taking place between the second working medium and the air, as a result of which the temperature of said air is reduced. The role of the fan is to create a stream of cooled air directed at gas cylinders.

For proper distribution of cold air, guides in the form of flexible pipes inserted between cooled cylinders, or pipes designed to work as nozzles are drilled in an appropriate arrangement, which depends on a specific application (cylinder size, type of the first medium, etc.) or tubing is located directly near the components to be cooled, are preferably used.

In a preferred embodiment of the invention, the air cooler and the blowing fan are integrally connected to each other. In another preferred embodiment of the invention, the cooler and the blowing fan are separated from each other.

Preferably, the air cooler is a finned heat exchanger. It is also possible to use other heat exchangers designed for operation in the liquid-gas system, such as tubular exchangers with ribbing, plate exchangers, etc.

The number of cooling devices used in the method and installation according to the present invention depends on the efficiency of the installation for filling gas cylinders, in particular the temperatures reached by the cylinders during filling and the number of cylinders being filled simultaneously. In one preferred embodiment, each gas cylinder is associated with one cooling device. In other preferred embodiments, one cooling device is associated with two, three or four gas cylinders. In still other preferred embodiments of the invention, each cylinder is associated with two, three or four cooling devices.

The cooling device may be located at various positions relative to the gas cylinder, e.g. above the cylinder or to the side of the cylinder, provided that the blow of cold air is directed substantially towards the cylinder, preferably directly towards the cylinder. If more than one cooling device is assigned to one cylinder, these may be located at different positions in relation to the cylinder.

The air can be cooled to a temperature in the range of from about -10°C to about 20°C, preferably from about -5°C to about 10°C, more preferably from about 10°C to about 8°C, for example from about 5°C to about 7°C, for example about 10°C, in particular about 8°C, particularly preferably about 2°C.

Due to the blow of cold air, the temperature of the gas cylinder can drop to a temperature in the range from about 10°C to about 40°C, preferably from about 20°C to about 30°C, or by a temperature in the range from about 10°C to about 40°C, preferably about 20°C, more preferably about 15, e.g. about 10°C.

### Other components of the installation

The installation according to the present invention includes all the necessary technical means used in this type of installations, including, i.a. conduits for conveying gas in liquefied and gaseous form, pumps, valves, connectors, equalizing systems, control and measurement sensors, such as temperature, pressure and mass flow rate sensors, etc.

The conduits for connecting individual components of the installation according to the project are steel tubes having a diameter in the range of 15-60 mm, equipped with wrapping that provides thermal insulation and connecting ports.

The installation of the present invention comprises pumps forcing the streams to flow through the conduits of the installation. Typically, the installation may comprise at least a pump arranged on a conduit leading from a liquefied gas source and/or pumps arranged on the conduits of the first and second operating medium. Pump placed on the conduit leading from a liquified gas source is a high-pressure cryogenic pump, that draws liquefied gas from the tank. The maximum operating pressure of the pump is 420 bar in the temperature range from 77 K to 323 K. In order to avoid sudden pressure fluctuations, at the outlet the pump is equipped with a pressure damper.

Preferably, pumps can be equipped with equalizing systems being a bypass conduit connecting the pump outlet to its inlet, equipped with a high-pressure valve.

All valves used in the installation of the present invention are high-pressure valves adapted to work with cryogenic fluids.

Preferably, in the installation according to the present invention there are temperature and/or pressure sensors for monitoring and controlling the course of various stages of the conducted process.

Preferably, the installation according to the present invention may comprise:
- a temperature sensor and/or pressure sensor located on a conduit leading from the liquefied gas source downstream of the liquefied gas pump, for monitoring the parameters of the liquefied gas before phase transition;
- a temperature sensor and/or pressure sensor disposed on the bypass conduit for monitoring parameters of liquified gas flowing in the bypass conduit;
- a temperature sensor and/or a pressure sensor located on the conduit exiting the heat exchanger for monitoring the parameters of the gas after a phase transition;
- if the installation includes an evaporator, a temperature sensor and/or a pressure sensor located on the conduit leading from the evaporator to the collecting connector to monitor the parameters of the gas after a phase transition;
- a temperature sensor and/or pressure sensor located in the insulated buffer tank for monitoring the temperature and/or pressure of the heat-accumulating medium;
- temperature sensors located on the conduits transporting the first and second working medium for monitoring the temperature of both said media before and after a phase transition;
- temperature sensors and/or pressure sensors placed on the cylinder filling station in the amount appropriate for the number of cylinders filled simultaneously at the station, for monitoring the parameters of the gas filled into each cylinder;
- temperature sensor located in a cooling device, designed to monitor the temperature of air cooler and air blown in the direction of the cylinder filling station;

Additionally, according to the invention, flow rate sensors may be used in each of the conduits in which the process streams are transported.

Preferably, the installation according to the present invention comprises an installation control system ensuring the correct sequence of actions performed by the installation components (valves and pumps) which is necessary to fill the cylinder, taking into account the changing gas parameters (temperature and pressure) obtained from sensors placed in different points of the installation according to the project. The control system is additionally responsible for optimizing the process parameters and maintaining the proper purity of the gas filled into the cylinder by ensuring the cylinder is properly purged, which is realized by removing gases from the cylinder (with obtaining the required vacuum - monitored by a pressure sensor), and then filling it with clean gas. The sequence - gas removal and then filling - can be repeated several times, and the number of repetitions depends on the required final gas purity in the cylinder. This is done with the help of a vacuum pump, present on the cylinder filling station.

Receiving information from sensors comprised in the installation according to the present invention as well as sending control signals from the control system is performed by means of appropriate control lines. Accordingly, the control system is preferably connected by appropriate control lines to each of the sensors comprised in the system, and additionally to each component of the installation, in particular controllable system components such as pumps, valves (including, but not limited to, a bypass conduit regulating valve, equalizing system valve and valves at the cylinder filling station), a splitting connector (in an embodiment of the installation in which an evaporator is used), a blowing fan, and any other controllable components of the installation.

Preferably, the control system is an automatic control system having a connection for communication with a computer system that can be used to control the installation.

In yet another preferred embodiment of the invention, the installation according to the present invention is connected to at least one other installation according to the present invention in such a manner, that each installation comprises all the separate components mentioned above, with the exception of the cylinder filling station which is common. This embodiment of the invention may be used to fill cylinders with mixtures of gases indicated above in the present description.

In this embodiment of the invention, the conduits leading from the heat exchanger are connected by means of the element, which controls flow, preferably a metering valve located upstream of the cylinder filling station. The cylinders are filled with mixtures of technical gases sequentially, in the order of filling, in such a way that the gas with the highest density is fed to the cylinder filling station first. The ingredients are mixed directly in the gas cylinder.

In this preferred embodiment of the invention, each of the connected installations may have its own control system, in which case these systems are connected to each other by a control line allowing for the coordination of processes, and in particular for maintaining a time sequence enabling the filling of the cylinder with the first and then the second component in order to obtain a gas mixture.

Alternatively, the installation of the present invention may be connected as described above to any other prior art installation outputting gas for filling a cylinder, for example to an installation not comprising a cooling system using heat from the liquid-gas phase transition of the liquified gas. Preferably, such a connection can be made by branching the lines leading from the buffer tank to a cooling device. In such an embodiment, the second working medium cooled by the heat exchange in an insulated buffer tank would therefore be divided into two streams, one of which is led to the cooling device from the installation according to the present invention and the other is directed to said second installation not comprising a cooling system using heat from the liquid-gas phase transition in order to cool gas cylinders.

In yet another particular embodiment of the invention, the installation according to the present invention is not connected to another prior art installation outputting gas for filling a cylinder, but comprises means for dividing the flow of the second working medium cooled by heat exchange in an insulated buffer tank. In this embodiment, the second working medium is separated into two streams, one of which is led to the cooling device from the installation according to the present invention and the other is directed outside the installation according to the invention, e.g. for storage, transport to another place, e.g. to another installation or for use for a different purpose.

According to the invention, the term "about" as used herein is to be understood as a deviation of +/- 5% from the stated value, reflecting inaccuracies that may arise during conducting of the process and measurement inaccuracies.

### Examples

### Example 1

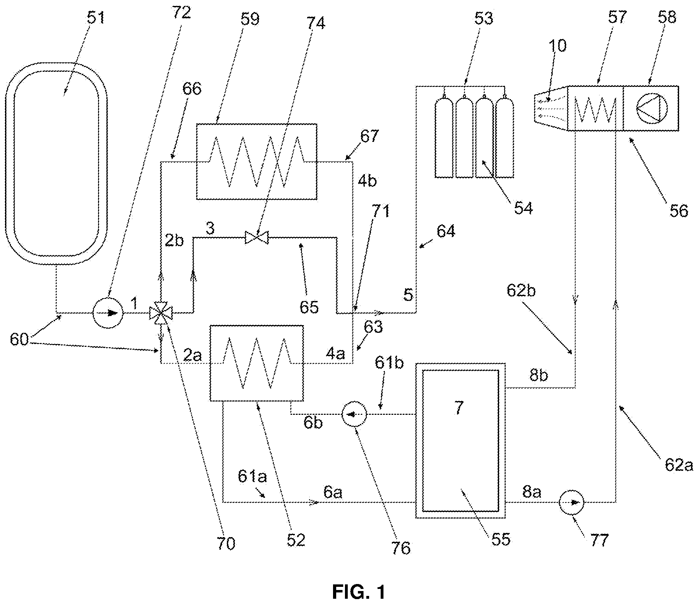

Example 1 relates to an embodiment of the installation according to the invention shown in Figure 1.

Accordingly, the installation comprises a vertical above-ground tank, being 2 m in diameter and 10 m in height, being a source 51 of liquefied argon gas. The tank is connected by a conduit 60 with a splitting connector 70. A cryogenic pump 72 is placed on the conduit 60, pumping a stream of liquefied gas 1 from a gas source 51. The installation uses a high-pressure cryogenic pump with a yield of 16-20 l/min, operating in the pressure range of 1.8 - 35 MPa (18-350 bar) and temperature range from about -196°C to about 50°C (77K - 323K). Three conduits exit the splitting connector 70 - conduit 60 leading to heat exchanger 52, bypass conduit 65, and conduit 66 leading to evaporator 59. Collection connector 70 is provided with a valve (not shown) allowing controlling the flow of liquefied gas between conduits 60 and 66.

In this embodiment, the heat exchanger 52 is a shell and tube exchanger in which the working medium (first working medium 6a, 6b) is ethylene glycol. The evaporator 59 used in the installation shown in Figure 1 is an atmospheric evaporator.

The bypass conduit 65 is provided with a regulating valve 74 for regulating the flow of the liquefied gas.

The conduit 63 exiting the heat exchanger 52, the conduit 67 exiting the evaporator 59, and the bypass conduit 65 converge in the collecting connector 71. A conduit 64 leading to the cylinder filling station 53 also exits the collecting connector 71. The cylinder filling station 53 enables the simultaneous filling of sixteen cylinders 54 with argon, with a volume of 37 liters each. The cylinders 54 are cylinders with an operating pressure of 300 bar. Each cylinder 54 in the filling station 53 of the cylinder pallet is placed in a basket (not shown) and is connected to the installation by a high pressure flexible hose (not shown) using a dosing valve (not shown).

The heat exchanger 52 is connected to the insulated buffer tank 55 by conduits 61a, 61b, which constitute the circuit of the first working medium 6a, 6b. The conduit leading from the insulated buffer tank 55 to the heat exchanger 52 is equipped with a centrifugal pump 76 forcing the flow of first working medium 6a, 6b.

The insulated buffer tank 55 with a volume of 800 L contains a heat-accumulating medium 7 which is an aqueous solution of ethylene glycol (concentration of 40% by weight). The insulated buffer tank is connected to the cooling device 56 by conduits 62a, 62b constituting the circuit of the second working medium 8a, 8b, which is ethylene glycol. The conduit 62a leading from the insulated buffer tank 55 to the cooling device 56 is provided with a centrifugal pump 78 forcing the flow of the second working medium 8a, 8b.

A single cooling device 56, placed on the cylinder 54 filling station 53, comprises an air cooler 57, which is a finned heat exchanger, and a blowing fan 58. The capacity of the blowing fan is from about 9000 to about 10500 m³/h.

The installation shown in Figure 1 is equipped with
- a temperature sensor and a pressure sensor located on the conduit 60 leading from a liquefied gas source 51 downstream of a liquefied gas pump 72,
- a temperature sensor and a pressure sensor located on the bypass conduit 65,
- a temperature sensor and a pressure sensor located on conduit 63 exiting the heat exchanger 52 for monitoring of the parameters of the gas after the phase transition;
- a temperature sensor and a pressure sensor located on conduit 67 leading from evaporator 59 to the collecting connector 71,
- a temperature sensor and a pressure sensor located in an insulated buffer tank 55,
- temperature sensors placed on conduits 61a, 61b, 62a, 62b conveying the first and second working medium 6a, 6b, 8a, 8b,
- temperature sensors and pressure sensors located at the cylinder filling station 53 in the amount corresponding to the number of cylinders filled simultaneously at the station,
- temperature sensors located in a cooling device 86, measuring the temperature of the air cooler 57 and the cooling air 10.

In addition, the installation also comprises flow rate sensors located on conduit 60, bypass conduit 65, conduit 63, conduit 64, and conduits 61a, 61b, 62a, 62b conveying the first and second medium 6a, 6b, 8a, 8b.

All sensors are connected to an automatic control system (not shown) for the installation via appropriate control lines. The control system is also connected by control lines to the cryogenic pump 72, control valve 74, splitting connector 70, pumps 76, 77 and the blowing fan 58 in such a manner as to control these components of the installation.

A stream of liquefied argon gas 1 at a temperature of about -186°C (87 K) and a pressure of about 1.8 MPa (18 bar) is pumped by the cryogenic pump 72 through conduit 60 to the splitting connector. The cryogenic pump increases the gas pressure to approximately 350 bar.

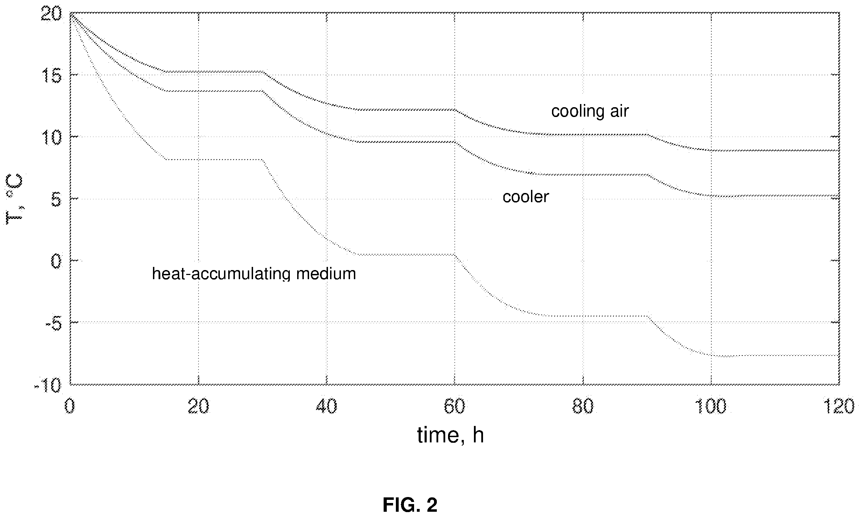

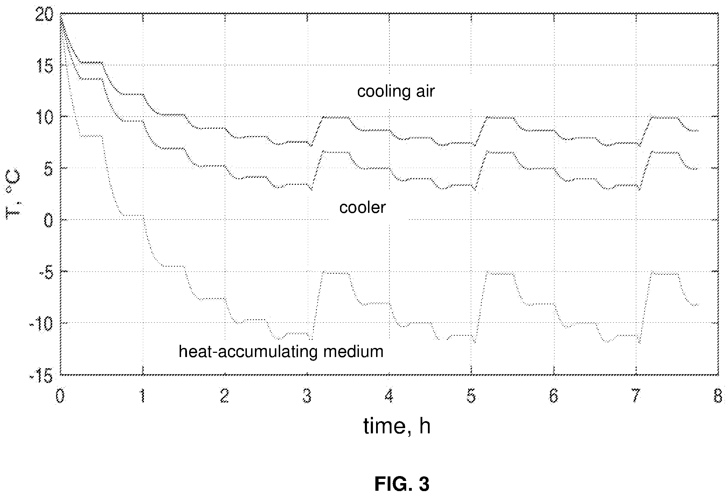

The temperature relationship of cooling air 10, heat-accumulating medium 7 and cooler 57 for the first two and eight hours of operation of the installation are shown in Figures 2 and 3, respectively.

At the very beginning of the process, the entire stream of liquid argon gas 1 is directed to the heat exchanger 52, in which the entire stream of liquid gas 1 is evaporated and heated to a temperature of about -20°C. The heat is collected from the circulating glycol - the first working medium 6a, 6b. First working medium 6a, 6b pumped by the pump 76 (flow rate of from about 60 to about 80 l/min) into the insulated buffer tank, lowers the temperature of the heat-accumulating medium 7 located in the insulated buffer tank 55. When the temperature of the heat-accumulating medium 7 drops below a predetermined threshold of about -12°C, in order not to freeze the glycol, a valve being a part of the splitting connector cuts off the conduit 60 leading to the heat exchanger 52 and opens the conduit 66 leading to the atmospheric evaporator 59. For the assumed installation parameters, the first such change takes place only after 7 filling cycles, i.e. after three hours of operation. The phase transition takes place in the atmospheric evaporator 59 until the temperature of the heat-accumulating medium 7 increases to about -5°C. Until then, the heat received from the phase transition is constantly stored in an insulated buffer tank 55. The circulation of the second working medium 8a, 8b in conduits 62a, 62b, which cools the air in the air cooler 57, is still on-going. Full performance of the air cooler 57 (the assumed air temperature is about 7°C) is achieved already in the fourth filing cycle. From the said graphs, it can be seen that this cycle repeats every two hours and the temperatures fluctuate slightly.

The effect of the periodical shut-off of the exchanger is that there is no heat removal in the insulated buffer vessel 55 and there is an immediate rise in the temperatures of the heat-accumulating medium 7 in the insulated buffer vessel 55, air cooler 57 and of the air 10 cooling the cylinders 54.

Heat-accumulating medium 7, which is contained in an insulated buffer tank 55 has an operating temperature in the range of about -5°C to about -10°C. The first working medium 6a conducted to the insulated buffer tank through a conduit 61a has an operating temperature in the range of from about -15°C to about -25°C. The second working medium 62b conducted to the insulated buffer tank through a conduit 62b has an operating temperature in the range from about - 3°C to about 6°C. The air blown on the cylinders 54 in the cylinder filling station has a temperature in the range of about 7°C to about 10°C. The capacity of the blowing fan is from about 9000 to about 10500 m³/h.

The valve contained in the splitting connector is designed in such manner that in addition to directing the partial flows 2a, 2b to the heat exchanger 52 and atmospheric evaporator 59, respectively, it also directs the partial bypass stream 3 of liquefied gas to the bypass conduit 65. The partial bypass stream 3 of liquefied gas is injected into the collecting connector 71 to the gas stream 4 exiting the heat exchanger 52 or the atmospheric evaporator 59. The entire injection process is controlled by a control valve 74.

Injecting the partial bypass stream 3 of liquefied gas into the gas stream 4 produces an outlet gas stream 5 having a temperature in the range from about -20°C to about 15°C and a pressure in the range from about 32 MPa to about 35 MPa (320-350 bar).

The gas output stream 5 is directed via conduit 64 to the cylinder filling station 53. The cylinder 54 is filled in accordance with a schedule including 15 minutes of filling and 15 minutes break.

The use of the cooling system according to the invention makes it possible to complete the cylinder filling process within 15 minutes while avoiding overheating of the cylinders being filled. Specifically, with the above-mentioned process parameters, due to using the cooling system according to the invention, it is possible to lower the cylinder temperature by approximately 30°C.

### Example 2

The results obtained with the installation of Example 1 were compared with those obtained with a conventional cylinder filling installation comprising an atmospheric evaporator and not comprising any cylinder cooling system ("reference installation"). In the reference installation, one pallet containing 15 gas cylinders was filled simultaneously. The working pressure of the cylinders used was standard and equal to 20 MPa (200 bar), and their volume was 50 liters.

The first measurements made for the reference installation showed not only that the cylinder filling reached the level of 30 minutes, but also that the temperature of the cylinders being filled at the end of the filling process was equal to almost 60°C.

In the reference installation, 50-liter cylinders are filled with argon at the pressure of 200 bar. The volume of gas converted to normal conditions is 10.5 nm³. The cylinders are filled within 30 minutes, which means that with 15 cylinders filled simultaneously, the filling speed of one cylinder is 0.35 nm³/min.

For comparison, in the installation according to the invention the filling time of the cylinder was reduced to 15 minutes. Although the installation according to the invention uses smaller bottles (37 liters), since they are filled at a higher pressure - 30 MPa (300 bar), the gas volume converted to normal conditions in such bottles is 11.66 nm³. The cylinder filling speed achieved in this manner is therefore more than twice as high and is equal to 0.78 nm³/min. The capacity of the installation varies depending on the number of pallets of cylinders filled per cycle. In the case described in Example 1, i.e. when filling a single pallet containing 16 cylinders, the efficiency of the installation is 746 nm³/h of gas.

## Claims

1. A method for filling gas cylinders comprising the steps of:
a) conveying a stream of liquified gas (1) from at least one gas source (51) to at least one heat exchanger (52),
b) conducting a phase transition of the stream of liquified gas (1) into gas in at least one heat exchanger (52), while cooling a first working medium (6b),
c) conveying an output gas stream (5) to at least one cylinder (54) filling station (53),
d) filling gas into at least one cylinder (54),
**characterized in that**
the method further comprises the process of cooling the filling cylinder comprising:
e) conveying the first working medium (6a) from at least one heat exchanger to at least one insulated buffer tank,
f) conducting heat exchange between the first working medium (6a, 6b) and a heat-accumulating medium (7) in at least one insulated buffer tank,
g) conducting heat exchange between the heat-accumulating medium (7), and a second working medium (8a, 8b) in at least one insulated buffer tank,
h) conveying the second working medium (8a) from at least one insulated buffer tank to at least one cooling device comprising at least one air cooler and at least one blowing fan, wherein at least one cooling device is located adjacent to at least one cylinder filling station,
i) conducting heat exchange between the second working medium (8a, 8b) and air (10) in at least one air cooler,
j) blowing air (10) substantially towards at least one gas cylinder filling station.

2. Method according to claim 1, wherein it comprises temperature and/or pressure and/or flow rate measurements of the liquefied gas stream (1) and/or the partial stream (2a, 2b) and/or the partial bypass stream (3) and/or the gas stream (4a, 4b) and/or the outlet gas stream (5) and/or the streams of the first working medium (6a, 6b) and/orthe streams of the second working medium (8a, 8b) and/or the heat-accumulating medium (7) and/or air (10) and/or at least one cooling device and/or at least one gas cylinder being filled.

3. The method according to claim 1 or 2, wherein
a1) upstream of the heat exchanger, the liquefied gas stream (1) is divided into at least one partial stream (2a) and a partial bypass stream (3), wherein at least one partial stream (2a) is conveyed to at least one heat exchanger, and the partial bypass stream (3) is conveyed through a bypass line bypassing at least one heat exchanger, and then
a2) a partial bypass stream (3) is injected into gas stream (4a, 4b) exiting the at least one first heat exchanger to form an outlet gas stream (5).

4. The method according to claim 3, wherein the liquefied gas stream (1) can be divided into two partial streams (2a, 2b) and one bypass stream (3), wherein when the partial stream (2a) is led to the heat exchanger, the partial stream (2b) is stopped, and when the temperature of the heat-accumulating medium (7) is within a predetermined threshold range, the partial stream (2a) flow is stopped and the partial stream (2b) is led to an evaporator, wherein the streams (4a, 4b) exiting the heat exchanger and evaporator are combined with the bypass stream to form an outlet gas stream (5).

5. The method according to claim 2, wherein upstream of the heat exchanger flow of liquified gas (1) may be divided into two partial streams (2a, 2b), wherein when the partial stream (2a) is guided to the heat exchanger, partial stream (2b) is stopped, and when the temperature of the heat-accumulating medium (7) is within a predetermined threshold range, the flow of the partial stream (2a) is stopped and the partial stream (2b) is led to an evaporator.

6. The method according to any one of claims 1 to 5, wherein regulating of the pressure of liquified gas (1) before introducing it to at least one first heat exchanger and/or controlling the flow rate of partial bypass stream (3) and/or controlling the rate of filling of at least one cylinder, adjusting the operating parameters of the cooling device and/or controlling the flow rate of the streams of the first and/or second working medium (6a, 6b, 8a, 8b) is carried out by a computer system using the results of measurements of temperature and/or pressure and/or flow rate of liquefied gas stream (1) and/or partial stream (2a, 2b) and/or partial bypass stream (3) and/or gas stream (4a, 4b) and/or outlet gas stream (5) and/or the streams of the first working medium (6a, 6b) and/or the streams of the second working medium (8a, 8b) and/or the heat-accumulating medium (7) and/or air (10) and/or at least one cooling device and/or at least one gas cylinder being filled.

7. An installation for filling gas cylinders with pressurized gases comprising:
at least one source (51) of liquefied gas,
at least one heat exchanger (52) with the first working medium (6a, 6b),
at least one cylinder filling station (53) comprising at least one gas cylinder (54), **characterized in that** it comprises
at least one insulated buffer tank (55) with heat-accumulating medium (7),
at least one cooling device (56) comprising at least one air cooler (57) and at least one blowing fan (58), wherein at least one cooling device (56) is located adjacent to at least one cylinder filling station (53),
wherein
at least one heat exchanger (52) is connected to the source (51) of liquefied gas by a conduit (60),
the at least one heat exchanger (52) is connected by conduits (61a, 61b) constituting the circuit of the first working medium (6a, 6b) in contact with the heat-accumulating medium (7), to at least one insulated buffer tank (55),
at least one insulated buffer tank (55) is connected by conduits (62a, 62b) constituting the circuit of the second working medium (8a, 8b) in contact with the heat-accumulating medium (7), with at least one air cooler (57), and
at least one blowing fan (58) is directed such that air (10) is blown substantially toward at least one gas cylinder filling station.

8. The installation according to claim 7, wherein it further comprises:
a splitting connector (70) connected by a conduit (60) to at least one source (51) of liquefied gas and the heat exchanger (52),
a collecting connector (71) connected by a conduit (63) to at least one heat exchanger (52) and by a conduit (64) to at least one cylinder filling station (53), and
a bypass conduit (65) connected to the splitting connector (70) and the collecting connector (71).

9. The installation according to claim 7 or 8, wherein it comprises temperature and/or pressure and/or flow rate sensors connected to the conduit (60) and/or conduits (61a, 61b) and/or conduits (62a, 62b) and/or a conduit (63) and/or a conduit (64) and/or a bypass conduit (65) and/or in at least one cylinder filling station (53) and/or in at least one insulated buffer tank (55) and/or in at least one cooling device (56).

10. The installation according to claim 7 or 8, wherein it further comprises an evaporator (59) connected to the splitting connector (70) and the collecting connector (71) by conduits (66, 67).

11. The installation according to claim 7 or 8, wherein it comprises an evaporator (59) connected to a bypass conduit (65) between the splitting connector (70) and the collecting connector (71).

12. The installation according to any one of claims 7-11, wherein it further comprises a pump (72) connected to the conduit (60) between the source of liquified gas (51) and the heat exchanger (52) or the splitting connector (70).

13. The installation according to claim 12 wherein it further comprises an equalizing system connected to a conduit (60) upstream and downstream of the pump (72).

14. The installation according claim 12, wherein it comprises a control circuit coupled to the collecting connector (71) and/or the pump (72) and/or the pumps (76, 77), control valve (74) and/or cooling device (57) and/or sensors present in the installation and/or at least one cylinder filling station.

15. The installation according to any one of claims 7-14, wherein it comprises means for dividing the second working fluid stream (8a) cooled in at least one insulated buffer tank (55), and guiding it outside the installation.

## Patentansprüche

1. Verfahren zum Befüllen von Gasflaschen, das die folgende Schritte umfasst:
a) Fördern eines Stroms eines verflüssigten Gases (1) von mindestens einer Gasquelle (51) zu mindestens einem Wärmetauscher (52),
b) Durchführen eines Phasenübergangs des Stroms des verflüssigten Gases (1) in Gas in mindestens einem Wärmetauscher (52), während ein erstes Arbeitsmedium gekühlt wird (6b),
c) Fördern eines Ausgangsgasstroms (5) zu mindestens einer Füllstation (53) für Flaschen (54)
d) Befüllen von mindestens einer Flasche mit Gas (54),
**dadurch gekennzeichnet, dass**
das Verfahren außerdem den Prozess des Abkühlens der gefüllten Flasche umfasst, der:
e) das Fördern des ersten Arbeitsmediums (6a) von mindestens einem Wärmetauscher zu mindestens einem isolierten Puffertank,
f) das Durchführen eines Wärmeaustauschs zwischen dem ersten Arbeitsmedium (6a, 6b) und einem wärmespeichernden Medium (7) in mindestens einem isolierten Puffertank,
g) das Durchführen eines Wärmeaustauschs zwischen dem wärmespeichernden Medium (7) und einem zweiten Arbeitsmedium (8a, 8b) in mindestens einem isolierten Puffertank,
h) das Fördern des zweiten Arbeitsmediums (8a) von mindestens einem isolierten Puffertank zu mindestens einer Kühlvorrichtung, die mindestens einen Luftkühler und mindestens ein Gebläse umfasst, wobei mindestens eine Kühlvorrichtung angrenzend an mindestens eine Füllstation für Flaschen angeordnet ist,
i) das Durchführen eines Wärmeaustauschs zwischen dem zweiten Arbeitsmedium (8a, 8b) und Luft (10) in mindestens einem Luftkühler,
j) das Blasen von Luft (10) im Wesentlichen in Richtung mindestens einer Füllstation für Flaschen
umfasst.

2. Verfahren nach Anspruch 1, wobei es Temperatur- und/oder Druck- und/oder Strömungsgeschwindigkeitsmessungen des verflüssigten Gasstroms (1) und/oder des Teilstroms (2a, 2b) und/oder des Teil-Bypassstroms (3) und/oder des Gasstroms (4a, 4b) und/oder des Auslassgasstroms (5) und/oder der Ströme des ersten Arbeitsmediums (6a, 6b) und/oder der Ströme des zweiten Arbeitsmediums (8a, 8b) und/oder des wärmespeichernden Mediums (7) und/oder der Luft (10) und/oder mindestens einer Kühlvorrichtung und/oder mindestens einer zu füllenden Gasflasche umfasst.

3. Verfahren nach Anspruch 1 oder 2, wobei
a1) der verflüssigte Gasstrom (1) vor dem Wärmetauscher in mindestens einen Teilstrom (2a) und einen Teil-Bypassstrom (3) aufgeteilt wird, wobei mindestens ein Teilstrom (2a) zu mindestens einem Wärmetauscher gefördert wird und der Teil-Bypassstrom (3) durch eine Bypassleitung gefördert wird, die mindestens einen Wärmetauscher umgeht, und anschließend
a2) ein Teil-Bypassstrom (3) in den aus dem mindestens einen ersten Wärmetauscher austretenden Gasstrom (4a, 4b) eingespritzt wird, um einen Auslassgasstrom (5) zu bilden.

4. Verfahren nach Anspruch 3, wobei der verflüssigte Gasstrom (1) in zwei Teilströme (2a, 2b) und einen Bypassstrom (3) aufgeteilt werden kann, wobei, wenn der Teilstrom (2a) zu dem Wärmetauscher geleitet wird, der Teilstrom (2b) gestoppt wird, und, wenn die Temperatur des wärmespeichernden Mediums (7) innerhalb eines vorbestimmten Schwellenwertbereichs liegt, die Strömung des Teilstroms (2a) gestoppt und der Teilstrom (2b) zu einem Verdampfer geleitet wird, wobei die den Wärmetauscher und den Verdampfer verlassenden Ströme (4a, 4b) mit dem Bypassstrom kombiniert werden, um einen Auslassgasstrom (5) zu bilden.

5. Verfahren nach Anspruch 2, wobei die Strömung des verflüssigten Gases (1) vor dem Wärmetauscher in zwei Teilströme (2a, 2b) aufgeteilt werden kann, wobei, wenn der Teilstrom (2a) zum Wärmetauscher geleitet wird, der Teilstrom (2b) gestoppt wird, und, wenn die Temperatur des wärmespeichernden Mediums (7) innerhalb eines vorgegebenen Schwellenwertbereichs liegt, die Strömung des Teilstroms (2a) gestoppt und der Teilstrom (2b) zu einem Verdampfer geleitet wird.

6. Verfahren nach einem der Ansprüche 1 bis 5, wobei die Regelung des Drucks des verflüssigten Gases (1) vor dessen Einleiten in mindestens einen ersten Wärmetauscher und/oder die Regelung der Strömungsgeschwindigkeit des Teil-Bypassstroms (3) und/oder die Regelung der Füllgeschwindigkeit mindestens einer Flasche, die Einstellung der Betriebsparameter der Kühlvorrichtung und/oder die Regelung der Strömungsgeschwindigkeit der Ströme des ersten und/oder zweiten Arbeitsmediums (6a, 6b, 8a, 8b) durch ein Computersystem unter Verwendung der Ergebnisse von Messungen der Temperatur und/oder des Drucks und/oder der Strömungsgeschwindigkeit des verflüssigten Gasstroms (1) und/oder des Teilstroms (2a, 2b) und/oder des Teil-Bypassstroms (3) und/oder des Gasstroms (4a, 4b) und/oder des Auslassgasstroms (5) und/oder der Ströme des ersten Arbeitsmediums (6a, 6b) und/oder der Ströme des zweiten Arbeitsmediums (8a, 8b) und/oder des wärmespeichernden Mediums (7) und/oder der Luft (10) und/oder mindestens einer Kühlvorrichtung und/oder mindestens einer Gasflasche, die befüllt wird, durchgeführt wird.

7. Anlage zum Befüllen von Gasflaschen mit unter Druck stehenden Gasen, umfassend:
mindestens eine Quelle (51) des verflüssigten Gases,
mindestens einen Wärmetauscher (52) mit dem ersten Arbeitsmedium (6a, 6b),
mindestens eine Füllstation (53) für Flaschen mit mindestens einer Gasflasche (54), **dadurch gekennzeichnet, dass** sie das Folgende umfasst:
mindestens einen isolierten Puffertank (55) mit einem wärmespeichernden Medium (7),
mindestens eine Kühlvorrichtung (56), die mindestens einen Luftkühler (57) und mindestens ein Gebläse (58) umfasst, wobei mindestens eine Kühlvorrichtung (56) angrenzend an mindestens eine Füllstation (53) für Flaschen angeordnet ist,
wobei
mindestens ein Wärmetauscher (52) ist über eine Leitung (60) mit der Quelle (51) des verflüssigten Gases verbunden,
der mindestens eine Wärmetauscher (52) durch Leitungen (61a, 61b), die den Kreislauf des ersten Arbeitsmediums (6a, 6b) bilden, der mit dem wärmespeichernden Medium (7) in Kontakt steht, mit mindestens einem isolierten Puffertank (55) verbunden ist,
mindestens ein isolierter Puffertank (55) durch Leitungen (62a, 62b), die den Kreislauf des zweiten Arbeitsmediums (8a, 8b) bilden, der mit dem wärmespeichernden Medium (7) in Kontakt steht, mit mindestens einem Luftkühler (57) verbunden ist, und
mindestens ein Gebläse (58) so ausgerichtet ist, dass die Luft (10) im Wesentlichen in Richtung mindestens einer Füllstation für Gasflaschen geblasen wird.

8. Anlage nach Anspruch 7, wobei sie außerdem:
einen Aufteilungsanschluss (70), der über eine Leitung (60) mit mindestens einer Quelle (51) des verflüssigten Gases und dem Wärmetauscher (52) verbunden ist,
einen Sammelanschluss (71), der über eine Leitung (63) mit mindestens einem Wärmetauscher (52) und über eine Leitung (64) mit mindestens einer Füllstation (53) für Flaschen verbunden ist, und
eine Bypassleitung (65), die mit dem Aufteilungsanschluss (70) und dem Sammelanschluss verbunden ist (71),
umfasst.

9. Anlage nach Anspruch 7 oder 8, wobei sie Temperatur- und/oder Druck- und/oder Strömungsgeschwindigkeitssensoren umfasst, die an die Leitung (60) und/oder Leitungen (61a, 61b) und/oder Leitungen (62a, 62b) und/oder eine Leitung (63) und/oder eine Leitung (64) und/oder eine Bypassleitung (65) und/oder in mindestens einer Füllstation (53) für Flaschen und/oder in mindestens einem isolierten Puffertank (55) und/oder in mindestens einer Kühlvorrichtung (56) angeschlossen sind.

10. Anlage nach Anspruch 7 oder 8, wobei sie zusätzlich einen Verdampfer (59) aufweist, der über Leitungen (66, 67) mit dem Aufteilungsanschluss (70) und dem Sammelanschluss (71) verbunden ist.

11. Anlage nach Anspruch 7 oder 8, wobei sie einen Verdampfer (59) aufweist, der an eine Bypassleitung (65) zwischen dem Aufteilungsanschluss (70) und dem Sammelanschluss (71) angeschlossen ist.

12. Anlage nach einem der Ansprüche 7 bis 11, wobei sie außerdem eine Pumpe (72) umfasst, die an die Leitung (60) zwischen der Quelle (51) des verflüssigten Gases und dem Wärmetauscher (52) oder dem Aufteilungsanschluss (70) angeschlossen ist..

13. Anlage nach Anspruch 12, wobei sie außerdem ein Ausgleichssystem umfasst, das an eine Leitung (60) stromaufwärts und stromabwärts der Pumpe (72) angeschlossen ist.

14. Anlage nach Anspruch 12, wobei sie einen Steuerkreis umfasst, der mit dem Sammelanschluss (71) und/oder der Pumpe (72) und/oder den Pumpen (76, 77), dem Steuerventil (74) und/oder der Kühlvorrichtung (57) und/oder den in der Anlage vorhandenen Sensoren und/oder mindestens einer Füllstation für Flaschen gekoppelt ist.

15. Anlage nach einem der Ansprüche 7 bis 14, wobei sie Mittel zum Aufteilen des in mindestens einem isolierten Puffertank (55) gekühlten zweiten Arbeitsfluidstroms (8a) und zum Ableiten des Arbeitsfluidstroms aus der Anlage heraus umfasst.

## Revendications

1. Procédé de remplissage de bouteilles de gaz comprenant les étapes de :
a) transporter un flux de gaz liquéfié (1) depuis au moins une source de gaz (51) à au moins un échangeur de chaleur (52),
b) effectuer une transition de phase du flux de gaz liquéfié (1) en gaz dans au moins un échangeur de chaleur (52), tout en refroidissant un premier agent de travail (6b),
c) transporter un flux de gaz de sortie (5) à au moins une station (53) de remplissage de bouteilles (54),
d) introduire du gaz dans au moins une bouteille (54),
**caractérisé en ce que**
le procédé comprend en outre le processus de refroidissement de la bouteille remplie, comprenant :
e) le transport du premier agent de travail (6a) d'au moins un échangeur de chaleur à au moins un réservoir tampon isolé,
f) la réalisation d'un échange thermique entre le premier agent de travail (6a, 6b) et un agent accumulateur de chaleur (7) dans au moins un réservoir tampon isolé,
g) la réalisation d'un échange thermique entre l'agent accumulateur de chaleur (7) et un deuxième agent de travail (8a, 8b) dans au moins un réservoir tampon isolé,
h) le transport du deuxième agent de travail (8a) depuis au moins un réservoir tampon isolé jusqu'à au moins un dispositif de refroidissement comprenant au moins un refroidisseur d'air et au moins un ventilateur soufflant, au moins un dispositif de refroidissement étant situé à proximité d'au moins une station de remplissage de bouteilles,
i) la réalisation d'un échange thermique entre le deuxième agent de travail (8a, 8b) et l'air (10) dans au moins un refroidisseur d'air,
j) le soufflage d'air (10) sensiblement vers au moins une station de remplissage de bouteilles de gaz.

2. Procédé selon la revendication 1, ledit procédé comprenant des mesures de température et/ou de pression et/ou de débit de flux du flux de gaz liquéfié (1) et/ou du flux partiel (2a, 2b) et/ou du flux de dérivation partiel (3) et/ou du flux de gaz (4a, 4b ) et/ou du flux de gaz de sortie (5) et/ou des flux du premier agent de travail (6a, 6b) et/ou des flux du deuxième agent de travail (8a, 8b) et/ou de l'agent accumulateur de chaleur ( 7) et/ou de l'air (10) et/ou d'au moins un dispositif de refroidissement et/ou d'au moins une bouteille de gaz à remplir.

3. Procédé selon la revendication 1 ou 2, dans lequel
a1) en amont de l'échangeur de chaleur, le flux de gaz liquéfié (1) est divisé en au moins un flux partiel (2a) et un flux de dérivation partiel (3), au moins un flux partiel (2a) étant transporté à au moins un échangeur de chaleur, et le flux de dérivation partiel (3) étant transporté à travers une ligne de dérivation contournant au moins un échangeur de chaleur, puis
a2) un flux de dérivation partiel (3) est injecté dans le flux de gaz (4a, 4b) sortant de l'au moins un premier échangeur de chaleur pour former un flux de gaz de sortie (5).

4. Procédé selon la revendication 3, dans lequel le flux de gaz liquéfié (1) peut être divisé en deux flux partiels (2a, 2b) et un flux de dérivation (3), dans lequel lorsque le flux partiel (2a) est amené vers l'échangeur de chaleur, le flux partiel (2b) est arrêté , et lorsque la température de l'agent accumulateur de chaleur (7) se situe dans une plage seuil prédéterminée, l'écoulement du flux partiel (2a) est arrêté et le flux partiel (2b) est amené vers un évaporateur, dans lequel les flux (4a, 4b) sortant de l'échangeur de chaleur et de l'évaporateur sont combinés avec le flux de dérivation pour former un flux de gaz de sortie (5).

5. Procédé selon la revendication 2, dans lequel en amont de l'échangeur de chaleur, l'écoulement du gaz liquéfié (1) peut être divisé en deux flux partiels (2a, 2b), dans lequel lorsque le flux partiel (2a) est guidé vers l'échangeur de chaleur, le flux partiel (2b) est arrêté, et lorsque la température de l'agent accumulateur de chaleur (7) se situe dans une plage seuil prédéterminée, l'écoulement du flux partiel (2a) est arrêté et le flux partiel (2b) est amené vers un évaporateur.

6. Procédé selon l'une quelconque des revendications 1 à 5, dans lequel la régulation de la pression du gaz liquéfié (1) avant son introduction dans au moins un premier échangeur de chaleur et/ou le contrôle du débit de flux de dérivation partiel (3) et/ou le contrôle du débit de remplissage d'au moins une bouteille, la régulation des paramètres de fonctionnement du dispositif de refroidissement et/ou le contrôle du débit de flux des flux du premier et/ou du deuxième agent de travail ( 6a, 6b, 8a, 8b) sont réalisés par un système informatique à partir des résultats de mesures de température et/ou de pression et/ou de débit de flux de gaz liquéfié (1) et/ou de flux partiel (2a, 2b) et/ ou de flux de dérivation partiel (3) et/ou de flux de gaz (4a, 4b) et/ou de flux de gaz de sortie (5) et/ou de flux du premier agent de travail (6a, 6b) et/ou de flux du deuxième agent de travail (8a, 8b) et/ou d'agent accumulateur de chaleur (7) et/ou d'air (10) et/ou d'au moins un dispositif de refroidissement et/ou d'au moins une bouteille de gaz en cours de remplissage..

7. Installation de remplissage de bouteilles de gaz avec des gaz sous pression comprenant:
au moins une source (51) de gaz liquéfié,
au moins un échangeur de chaleur (52) avec le premier agent de travail (6a, 6b),
au moins une station de remplissage de bouteilles (53) comprenant au moins une bouteille de gaz (54),
**caractérisée en ce qu'**elle comprend
au moins un réservoir tampon isolé (55) avec un agent accumulateur de chaleur (7),
au moins un dispositif de refroidissement (56) comprenant au moins un refroidisseur d'air (57) et au moins un ventilateur soufflant (58), au moins un dispositif de refroidissement (56) étant situé à proximité d'au moins une station de remplissage de bouteilles (53),
dans laquelle
au moins un échangeur de chaleur (52) est relié à la source (51) de gaz liquéfié par un conduit (60),
l'au moins un échangeur de chaleur (52) est relié par des conduits (61a, 61b) constituant le circuit du premier agent de travail (6a, 6b) en contact avec l'agent accumulateur de chaleur (7), à au moins un réservoir tampon isolé (55),
au moins un réservoir tampon isolé (55) est relié par des conduits (62a, 62b) constituant le circuit du deuxième agent de travail (8a, 8b) en contact avec l'agent accumulateur de chaleur (7), à au moins un refroidisseur d'air ( 57), et
au moins un ventilateur de soufflage (58) est orienté de telle sorte que l'air (10) soit soufflé sensiblement vers au moins une station de remplissage de bouteilles de gaz.

8. Installation selon la revendication 7, ladite installation comprenant en outre:
un connecteur de séparation (70) relié par un conduit (60) à au moins une source (51) de gaz liquéfié et à l'échangeur de chaleur (52),
un connecteur collecteur (71) relié par un conduit (63) à au moins un échangeur de chaleur (52) et par un conduit (64) à au moins une station de remplissage de bouteilles (53), et
un conduit de dérivation (65) relié au connecteur de séparation (70) et au connecteur collecteur (71).

9. Installation selon la revendication 7 ou 8, ladite installation comprenant des capteurs de température et/ou de pression et/ou de débit de flux reliés au conduit (60) et/ou aux conduits (61a, 61b) et/ou aux conduits (62a, 62b) et/ou à un conduit (63) et/ou à un conduit (64) et/ou à un conduit de dérivation (65) et/ou dans au moins une station de remplissage de bouteilles (53) et/ou dans au moins un réservoir tampon isolé (55) et/ou dans au moins un dispositif de refroidissement (56).

10. Installation selon la revendication 7 ou 8, ladite installation comprenant en outre un évaporateur (59) relié au connecteur de séparation (70) et au connecteur collecteur (71) par des conduits (66, 67).

11. Installation selon la revendication 7 ou 8, ladite installation comprenant un évaporateur (59) relié à un conduit de dérivation (65) entre le connecteur de séparation (70) et le connecteur collecteur (71).

12. Installation selon l'une quelconque des revendications 7-11, ladite installation comprenant en outre une pompe (72) reliée au conduit (60) entre la source de gaz liquéfié (51) et l'échangeur de chaleur (52) ou le connecteur de séparation (70).

13. Installation selon la revendication 12, ladite installation comprenant en outre un système d'égalisation relié à un conduit (60) en amont et en aval de la pompe (72).

14. Installation selon la revendication 12, ladite installation comprenant un circuit de commande couplé au connecteur collecteur (71) et/ou à la pompe (72) et/ou aux pompes (76, 77), à la vanne de commande (74) et/ou au dispositif de refroidissement (57) et/ou aux capteurs présents dans l'installation et/ou au moins une station de remplissage de bouteilles.

15. Installation selon l'une quelconque des revendications 7-14, ladite installation comprenant des moyens pour diviser le deuxième flux de fluide de travail (8a) refroidi dans au moins un réservoir tampon isolé (55), et le guider hors de l'installation.
